# EUROPÄISCHE PATENTSCHRIFT

(11) **EP 2 274 709 B1**
(45) Veröffentlichungstag und Bekanntmachung des Hinweises auf die Patenterteilung: **01.08.2012**
(21) Anmeldenummer: 08874176.4
(22) Anmeldetag: 19.11.2008
(51) Int. Cl.: G06K 9/00, B60S 1/08

(54) **VERFAHREN UND VORRICHTUNG ZUR VERARBEITUNG VON AUFGENOMMENEN BILDINFORMATIONEN AUS EINEM FAHRZEUG**
METHOD AND DEVICE FOR PROCESSING RECORDED IMAGE INFORMATION FROM A VEHICLE
PROCÉDÉ ET DISPOSITIF DE TRAITEMENT DES INFORMATIONS D'IMAGE RECUEILLIES SUR UN VÉHICULE

(30) Priorität: 09.05.2008 DE 102008001679
(43) Veröffentlichungstag der Anmeldung: 19.01.2011
(73) Patentinhaber: Robert Bosch GmbH, 70442 Stuttgart (DE)
(72) Erfinder: HAUG, Karsten, 70372 Stuttgart (DE)
(86) Internationale Anmeldenummer: PCT/EP2008/065795
(87) Internationale Veröffentlichungsnummer: WO 2009/135541

(56) Entgegenhaltungen:
- EP-A- 1 334 888
- WO-A-2005/039957
- DE-A1- 10 303 046
- US-A1- 2007 047 809
- US-A1- 2008 044 062

## Beschreibung

### TECHNISCHES GEBIET

Die Erfindung betrifft ein Verfahren und eine Vorrichtung zur Verarbeitung von aus einem Fahrzeug aufgenommenen Bildinformationen.

### STAND DER TECHNIK

Für eine Vielzahl unterschiedlicher Fahrerassistenzsysteme in Fahrzeugen werden Bilddaten der Fahrzeugumgebung benötigt, die von Kameras geliefert werden. Diese Bilddaten helfen bei der Einhaltung der Spur (LDW oder Lane-Departure-Warning), um den Fahrer beispielsweise vor eigener Übermüdung zu warnen, bei der automatischen Spurkontrolle (LKS oder Lane-Keeping-Support), beispielsweise als Teil einer automatischen Fahrzeuglenkung, bei der Erkennung von Straßenverkehrsschildern (RSR, Road-Sign-Recognition) oder auch bei der aktiven Nachtsichtunterstützung mit Objekterkennung und Warnfunktion. Die Bilddaten für die Nachtsichtunterstützung werden durch nachtsichtfähige Kameras zur Verfügung gestellt.

Allen Systemen, die eine kamerabasierte aktive Erkennungsfunktion auf Basis von Bilddaten der Fahrzeugumgebung aufweisen, haben gemeinsam, dass sie sehr empfindlich gegenüber der zur Verfügung stehenden Bildqualität sind. Für die Erkennung von Straßenbegrenzungen oder Mittellinien wie auch bei der Erkennung von Straßenverkehrsschildern ist ein qualitativ hochwertiges Bild aus Fahrersicht notwendig. Da die hierfür verwendeten Kameras sich meist in der oberen Mitte der Windschutzscheibe oder auch in eigens angeordneten Höhlen des Fahrzeuges befinden, steht den Kameras keine bessere Sicht durch die Windschutzscheibe zur Verfügung als dem Fahrer selbst. Folglich sinkt die Leistungsfähigkeit dieser Systeme bei Regen erheblich ab, weil der optische Pfad der Kameras stark gestört ist und daher Mittellinien entweder gar nicht mehr oder nur noch erratisch erkannt und Straßenschilder überhaupt nicht detektiert werden.

Besonders die bei Regen zum Teil stark verzerrten Bilder der Fahrzeugumgebung durch die regennasse Windschutzscheibe ermöglichen den oben genannten Fahrerassistenzsystemen nicht oder nur unzureichend, das aufgenommene Bild zu analysieren, oder Regentropfen auf der Windschutzscheibe wirken wie lokale Linsen und blenden die Kamera so stark, dass kein verwertbares Bild mehr aufgenommen werden kann.

Aus der DE 102 19 788 sind Techniken bekannt, die Bildinformationen durch Auswertung des Kontrastverhältnisses so weit auszuwerten, dass eine Bestimmung der effektiven Sichtweite möglich ist, so dass die gesamte Einheit verwertbare Bildinformationen von nicht verwertbaren Bildinformationen trennen kann. Eine wirkliche Verbesserung der Fahrerassistenzfunktion kann durch diese Technik aber nicht erreicht werden.

DE 103 03 046 A1 beschreibt eine Vorrichtung und ein Verfahren zur quantitativen Abschätzung der Sichtweite in Fahrzeugen, wobei Bilddaten aus der Umgebung erfasst werden und zur Abschätzung der Sichtweite ausgewertet werden. Dabei wird im Fall einer Sichtverschlechterung durch Regentropfen auf der Windschutzscheibe der Scheibenwischer aktiviert, um eine genauere Beurteilung der tatsächlichen Sichtverhältnisse zu erreichen.

US 2007/0047809 A1 beschreibt ein Umwelterkennungsverfahren für ein Fahrzeug. Dabei werden Bilder einer Kamera analysiert um Informationen für den Fahrzeuglenker zu erhalten. Das Dokument beschreibt ferner eine Erkennung ob ein Scheibenwischer einen Bildausschnitt des Bildes verdeckt.

US 2008/0044062 A1 beschreibt einen Bildsensor für ein Fahrzeug. Dabei verwendet die Steuerung Informationen der Scheibenwischersteuerung oder Scheibenwischermotoren um eine Bilderfassung zu vermeiden, wenn ein Scheibenwischer das Sichtfeld des Bildsensors teilweise oder ganz überdeckt.

### OFFENBARUNG DER ERFINDUNG

Die Erfindung stellt ein Verfahren zur Verbesserung der Fahrerassistenzfunktion, speziell von Fahrerassistenzsystemen, die auf aus einem Fahrzeug aufgenommenen Videobildern basieren, zur Verfügung. Dabei werden durch eine Wichtung oder sogar durch eine Selektion von einzelnen Videobildern oder Bereichen einzelner Bilder die für die Fahrerassistenzfunktion zur Verfügung stehenden Bilddaten in qualitativ bessere oder schlechtere Bilddaten unterteilt.

Die Erfindung macht von der Wirkung eines Scheibenwischers Gebrauch. Bilder besserer Qualität sind unmittelbar nach Überstreichen der Windschutzscheibe durch den Scheibenwischer erhältlich. Bereits Bilder, die den Scheibenwischerschatten abbilden, weisen Teile mit höherer Qualität und solche Bildteile mit niederer Qualität auf. Bei der Aufnahme von Bildern ist es somit wichtig, die Bilder oder die Bildteile höherer Qualität von solchen Bildern oder Bildteilen zu unterscheiden, die durch Nässe auf der Windschutzscheibe verzerrt oder sogar unbrauchbar sind.

Korrespondierend dazu wird eine Vorrichtung zur Aufnahme von Bildinformationen aus einem Fahrzeug vorgeschlagen, aufweisend mindestens eine Kamera und mindestens eine Rechnereinheit, wobei die Rechnereinheit die Bildinformationen aus der Kamera in einzelne Bildeinheiten unterteilt und für jede individuelle Bildeinheit eine statistische Berechnung durchführt, wobei die Rechnereinheit die Daten der statistischen Berechnung dazu verwendet, zu entscheiden, ob ein Scheibenwischerschatten in der Bildeinheit vorhanden ist oder nicht und ob die Qualität der Bildinformation hoch oder niedrig ist. Daher wird vorzugsweise geprüft, ob die Qualität der Bildinformation größer oder kleiner als ein vorgegebener Schwellenwert der Qualität ist.

Weitere vorteilhafte Ausgestaltungen der Erfindung sind in den Unteransprüchen angegeben.

Zur Durchführung des Verfahrens wird einem Videosensor eine Rechnereinheit nachgeschaltet, welche die Bildinformationen auswertet. Die Auswertung führt zu einer Detektion des Scheibenwischerschattens in den Bildinformationen des Videosensors und diese Detektion von Lage und Zeitpunkt des Scheibenwischerschattens in den Bildinformationen werden dazu genutzt, ganze Bilder oder einzelne Bildbereiche mit hoher Qualität von solchen Bildern oder Bildbereichen mit niederer Qualität zu unterscheiden. Dies geschieht bevorzugt dadurch, indem unterschieden wird, ob die Qualität von Bildern oder Bildbereichen größer oder kleiner als ein vorgegebener Schwellenwert ist. Ist die Qualität größer als ein vorgegebener Schwellenwert liegen Bilder oder Bildteile mit hoher Qualität vor. Falls die Qualität kleiner als ein vorgegebener Schwellenwert für die Qualität ist, liegen Bilder oder Bildteile mit niedriger Qualität vor.

In einem Einzelbild wird die Unterscheidung erreicht durch eine räumliche Teilung des Einzelbildes durch einen Scheibenwischerschatten, wobei die qualitativ höherwertigen Bildbereiche erst kürzlich vom Scheibenwischer überwischt wurden und die qualitativ niederwertigen Bildbereiche erst vor längerer Zeit durch den Scheibenwischer überwischt wurden oder sogar unmittelbar kurz vor einer Überwischung stehen, in der das zur Verfügung stehende Bild durch eine Scheibenwischerbugwelle besonders schlecht ist. Im einfachsten Fall wird von der Rechnereinheit das Bild in einzelne Bildbereiche unterteilt, bevorzugt in einander berührende Kreissegmente, und die Rechnereinheit bestimmt das Helligkeitshistogramm für jeden individuellen Bildbereich. Aus dem Histogramm ist zu ermitteln, ob der kreissegmentförmige Bildbereich von einem Scheibenwischer im Kreissegment überdeckt ist oder nicht.

Zur Bestimmung, ob ein Scheibenwischer das Bild überdeckt hat, wird das Histogramm jedes Bildbereiches ausgewertet und eine überwiegend hohe Anzahl dunkler Bildpunkte in Relation zu den umgebenden Bildbereichen indizieren einen Scheibenwischer oder einen Teil davon in dem Bildbereich. Um aus einem Histogramm, das eine Verteilung der Helligkeitswerte aller Bildpunkte darstellt, zu bestimmen, ob es überwiegend dunkle oder überwiegend helle Bildpunkte aufweist, ist es möglich, dieses mit einem weiteren Histogramm zu korrelieren, wobei das weitere Histogramm eine ideale Helligkeitsverteilung von einem scheibenwischerbeschatteten Bildbereich darstellt. Nachdem ein Scheibenwischer oder sein Schatten positiv von der Rechnereinheit detektiert wurde, kann die Rechnereinheit die Bildbereiche klassifizieren, die eine geringe Bildqualität aufweisen, weil die Bildbereiche, die gerade von einem Scheibenwischer überstrichen wurden, gewöhnlich ein besseres und nicht durch eine nasse Windschutzscheibe verzerrtes Bild aufweisen.

Bei der Auswertung der Bilddaten durch das Fahrerassistenzsystem werden zur Erzeugung der Fahrerassistenzsignale die Bildbereiche mit qualitativ besseren Bilddaten stärker gewichtet als die Bildbereiche mit qualitativ schlechteren Bilddaten. Der im Fahrerassistenzsystem eingesetzte Algorithmus zur Bildauswertung bestimmt die beste Art der Wichtung der qualitativ unterschiedlichen Bilder oder Bildbereiche, die prinzipiell an zwei Stellen im Algorithmus vorgenommen werden kann. Bilder oder Bildbereiche unterschiedlicher Qualität können gemeinsam mit einer Zahl, die einer Wichtung entspricht, in den Algorithmus zur Analyse eingehen oder die Bilder werden erst ohne Wichtungsinformation durch den Algorithmus ausgewertet und das Ergebnis der Analyse mit einem einmal gewählten Algorithmus wird mit Hilfe der Information über die Güte des jeweils analysierten Bildes selbst gewichtet. Schließlich können auch beide Verfahren zur Wichtung nebeneinander verwendet werden. Durch die Wichtung, die unten näher erklärt wird, ist die Erkennung von Straßenschildern oder die Erkennung von Mittellinien mit größerer Zuverlässigkeit durchführbar, weil die Fahrerassistenzsignale im höheren Maß von qualitativ höherwertigen Bildern und nur im geringeren Maß von qualitativ schlechteren Bildern beeinflusst werden.

Bei der Aufnahme aufeinander folgender Bildern ist es möglich, die Wichtung der Bilddaten dadurch zu verbessern, in dem die Bildaufnahme mit der Scheibenwischerbewegung zeitlich synchronisiert wird. Hierzu wird in vorteilhafter Weise ein PLL-Verfahren, ein softwareimplementierter Phase Locked Loop (PLL), eingesetzt, welches einen Phasenzähler und das Ergebnis der positiven Wischerdetektion miteinander synchronisiert. Speziell in Fahrzeugen, die keine exakte Information über die Scheibenwischerstellung liefern können, ist dieses Verfahren dazu geeignet, dem Algorithmus zur Bildauswertung parallel zu den Einzelbildern aus dem Videosensor eine Information über die Phasenlage des Scheibenwischers relativ zur Bildaufnahme in einem Wischerzyklus zu liefern. Für eine Abfolge von vielen Bildern, die zeitlich mehrere Scheibenwischerzyklen überstreichen, ergibt sich so eine zeitlich periodische Wichtung der Bilder in Abhängigkeit von der Scheibenwischerphase, wobei die Bilder, die zeitlich unmittelbar nach Scheibenwischerüberstrich aufgenommen wurden, durch die Korrelation des Phasenzählers mit der Scheibenwischerfrequenz mit einem höheren Wichtungsfaktor in die Bildanalyse eingehen als solche Bilder die kurz vor einem Wischerüberstrich aufgenommen wurden.

Zur Synchronisation der Wichtung einzelner Bilder mit Hilfe des PLL-Verfahrens werden die Phasen zweier Signale miteinander verglichen und ein Signal an das andere angepasst, bis eine stabile Phasenbeziehung zwischen beiden Signalen vorherrscht. Das erste hier verwendete Signal stammt aus einem Algorithmus der Scheibenwischerdetektion, das zweimal für kurze Zeit innerhalb eines gesamten Scheibenwischerzyklus den Logikwert "wahr" zeigt, nämlich dann, wenn der Scheibenwischer einmal beim ersten Hinstrich das Bild des Videosensors überstreicht und einmal das Bild beim zweiten Rückstrich überstreicht. Entsprechend zeigt dieses Signal der Detektion des Scheibenwischerzyklus zwischen den Logikwerten "wahr" den Logikwert "falsch", nämlich dann, wenn der Scheibenwischer nicht im Bild abgebildet ist. Ein zweites Signal zur Synchronisation ist ein Phasenzähler, der bei einem beliebigen Punkt innerhalb eines Scheibenwischerzyklus beginnen kann und mit beliebiger Frequenz innerhalb der Grenzen des Phasenzählers die Phase zählen kann. Da der Scheibenwischer durch seine mechanische Anordnung für einen vorbestimmten Anteil der Scheibenwischerphase im Bild liegt, wird dem Phasenzähler für diesen Anteil ein Logikwert "wahr" und für die restlichen Phasenanteile der Logikwert "falsch" zugeordnet. Der PLL-Algorithmus ändert sodann die Phase des Phasenzählers und die Frequenz, bis das Scheibenwischerdetektionssignal, das möglicherweise mit dem Scheibenwischer durch eine Regensensorsteuerung in seiner Frequenz variiert, synchron läuft. Zur näheren Erläuterung des PLL-Algorithmus wird auf die Fachliteratur verwiesen. Bei der Wichtung der Bildinformationen wird also das durch den PLL-Algorithmus erzeugte Signal des Phasenzählers dazu verwendet, die Bildinformationen zu wichten. Dabei wird jedem Phasenwert des Phasenzählers ein Wichtungswert entweder durch eine Tabelle oder durch eine geschlossene Funktion zugeordnet, so dass für jedes einzelne Bild zunächst eine klare Phasenbeziehung zur Wischerbewegung vorliegt, nämlich in Form einer Phasenlage, ausgedrückt beispielsweise durch 0 bis 2π, 0° bis 360° oder einer direkten Zahl und über diese Phasenbeziehung wird dem Bild ein Wichtungsfaktor zugeordnet, beispielsweise im Intervall von 0 bis 1, welche für die Brauchbarkeit der Bildinformation steht, wobei im oben genannte Beispiel 0 für gar nicht brauchbar und 1 für vollumfänglich brauchbar steht.

Durch die Synchronisation kann die Wischerüberstreichung des aufgenommenen Bildes antizipiert werden. Dadurch, dass bekannt ist, wann der nächste Wischerüberstrich stattfindet, kann dem ersten Bild nach Wischerüberstrich ein hohes Qualitätsmaß zugeordnet werden und zeitlich darauf folgende Bilder werden mit einer zeitlichen Abklingfunktion in ihrem Qualitätsmaßstab bewertet, so dass das Bild unmittelbar vor einem weiteren Wischerüberstrich in seinem Qualitätsmaßstab am geringsten bewertet wird. Sofern aus einem elektrischen Bussystem des Fahrzeuges Daten darüber entnommen werden können, ob ein Scheibengebläse eingeschaltet ist oder nicht, ist es von Vorteil, wenn nicht das erste Bild nach Detektion des Wischers qualitativ am höchsten bewertet wird, sondern ein zeitlich länger als das erste Bild nach dem Wischerüberstrich aufgenommenes Bild. Denn ein Scheibengebläse führt dazu, dass eventuell nach dem Wischen zurückbleibende Wischstreifen verdunsten. Somit wird das qualitativ am besten bewertete Bild in Bezug auf den Wischerüberstrich zeitlich nach hinten geschoben.

In Ausgestaltung des Verfahrens ist es neben der Histogrammauswertung zur Erzeugung eines Signals zur Detektion des Scheibenwischers und anschließender Synchronisation der Wischerlage mit der Scheibenwischerfrequenz zur Erzeugung eines Faktors für die Wichtung auch möglich, einzelne Bildbereiche durch Bestimmung des Rauschmaßes in ihrer Qualität zu beurteilen. Dabei sind Bilder mit hohem Rauschmaß qualitativ geringwertiger als solche Bilder mit geringem Rauschmaß. Diese Rauschmaßbestimmung kann unabhängig von der Detektion des Scheibenwischers durchgeführt werden.

Um die Qualitätsbestimmung weiter zu verbessern, können noch Plausibilitätsprüfungen durchgeführt werden, die beispielsweise die Zeit zwischen zwei aus der Synchronisation erwarteten Scheibenwischerübergängen dazu nutzt, die Qualitätsbestimmung inhaltlich zu überprüfen. So muss ein Bild oder ein Bildbereich, das/der lange nicht von einem Scheibenwischer überstrichen worden ist, qualitativ schlechter sein als ein Bild oder Bildbereich, welches/welcher zu einer Zeit aufgenommen wurde, in welcher der letzte Scheibenwischerüberstrich erst kurz vergangen ist. Ebenso kann die Lage der Bildbereiche für eine Plausibilitätsüberprüfung herangezogen werden. So muss ein Bildbereich, der in Bezug auf den Scheibenwischerweg vor dem Scheibenwischer liegt, schlechter sein als ein Bildbereich, der sich unmittelbar hinter dem bewegenden Scheibenwischer befindet.

In besonderer Ausgestaltung der Erfindung können auch Winkelgeberdaten des Scheibenwischers zur Synchronisation des Phasenzählers mit der Wichtung verwendet werden. Dabei wird von einem mit dem Scheibenwischer verbundenen Winkelgeber der aktuelle Stellwinkel des Scheibenwischers ausgelesen und der Phasenzähler mit diesem Signal synchronisiert.

Um die Qualität der Auswertung der Bilddaten durch das Fahrerassistenzsystem noch weiter zu erhöhen, kann ein üblicher Regensensor, der die Frequenz des Scheibenwischers einstellt, mit dem System verbunden werden. Zur Synchronisation des Phasenzählers wird dieses Signal herangezogen, um möglichst schnell eine stabile Phasenbeziehung zwischen der sich ändernden Scheibenwischerfrequenz nach sich verändernden Regenverhältnissen und dem Phasenzähler herzustellen. Dabei ist die Auswirkung des mit der Scheibenwischersteuerung gekoppelten Regensensors auch, dass das Bild des Videosensors nicht häufiger als notwendig vom Scheibenwischer überstrichen wird, denn bei geringfügigem Regen kann eine zu hohe Frequenz des Scheibenwischers zu einer hohen Anzahl von Niedrigbewertungen eines aufgenommenen Bildes führen, weil der Scheibenwischer häufiger als nötig durch das Kamerabild streicht und damit häufig große Bildteile unnötig häufig verschlechtert.

Noch eine weitere Verbesserung schafft eine Synchronisation der Belichtungssteuerung der Kamera mit dem Scheibenwischer. Eine nicht synchronisierte Belichtungssteuerung könnte durch den wiederkehrenden Scheibenwischerschatten anfangen zu schwingen und die Belichtung der interessierenden Objekte bei Scheibenwischerdurchgang erhöhen und zwischen zwei Überdeckungen auf ein geregeltes Maß reduzieren. Sofern aber die Belichtungssteuerung synchronisiert wird, sind auch die qualitativ höherwertigen Bildteile, die hinter dem überstreichenden Scheibenwischer liegen für eine Auswertung verwendbar, wobei sich diese Bildteile in die weiteren Bildteile mit geregelter Belichtung einfügen und keine Artefakte durch Fehl- oder Überbelichtung in die Analyse einfügen.

### KURZE BESCHREIBUNG DER ZEICHNUNGEN

Die Erfindung wird anhand der beiliegenden Figuren näher erläutert.

Es zeigen:
- Figur 1: ein skizziertes Bild einer Kamera für ein Fahrerassistenzsystem mit darin abgebildetem Schatten eines Scheibenwischers,
- Figur 2: eine beispielhafte Aufteilung des Bildes in Kreissegmente,
- Figur 3: Blockschaltbild der Bildwichtungsfunktion,
- Figur 4: Diagramm zur Erläuterung der Abnahme der Bildqualität, und
- Figur 5: ein Blockschaltbild eines Fahrerassistenzsystems einer Vorrichtung zur Verbesserung der Bildinformation gemäß einer Ausführungsform der Erfindung.

### BESCHREIBUNG DER AUSFÜHRUNGSBEISPIELE

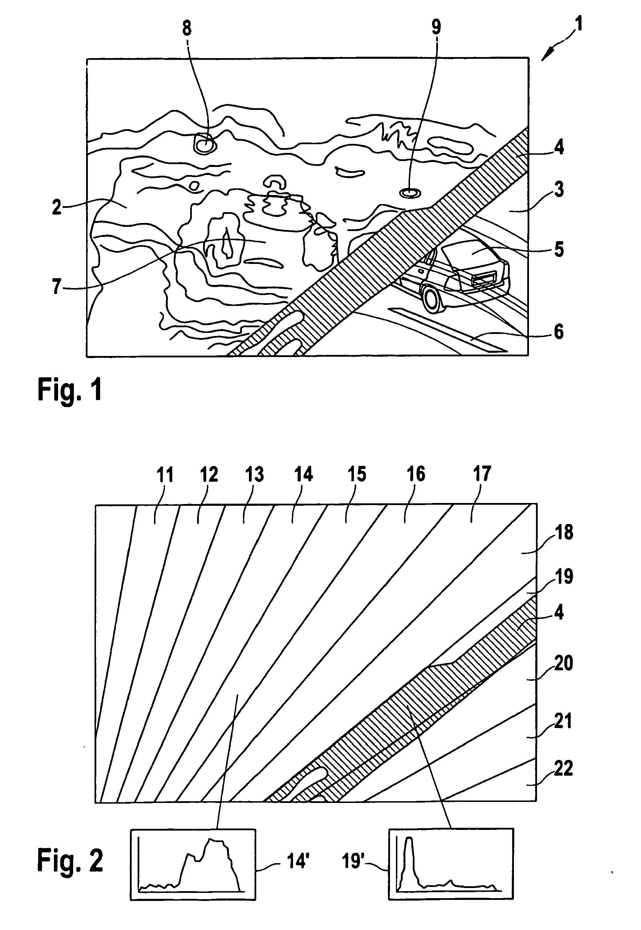

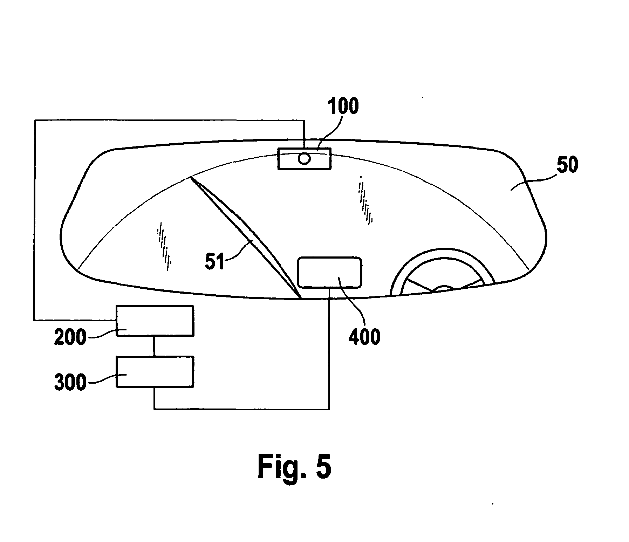

In Figur 1 ist ein skizziertes Kamerabild 1 dargestellt, welches für ein Fahrerassistenzsystem, wie beispielswcise RSR, LDW oder LKS verwendet wird. Das Kamerabild 1 weist einen Bildbereich 2 mit sehr schlechter Qualität und einen Bildbereich 3 mit besserer Qualität auf. Beide Bildbereiche 2 und 3 werden durch einen Scheibenwischerschatten 4 voneinander getrennt, wobei der Scheibenwischerschatten 4 von rechts nach links über das Bild 1 gleitet. In dem Bildbereich 3 besserer Qualität sind einzelne Bildbestandteile 5 und 6 vorhanden, die als Fahrzeugheck und als Straßenmarkierung zu erkennen sind. Im Bildbereich 2 schlechterer Qualität ist ebenfalls ein Bildbestandteil 7 sichtbar, welchcr nur schemenhaft als ein weiteres Fahrzeugheck erkennbar ist, weil Regen auf der Windschutzscheibe, durch welche hindurch Bild 1 aufgenommen ist, die Sicht bis zur Unkenntlichkeit verzerrt. Zusätzlich zur Verzerrung sind kurzlebige Wassertropfen 8 und 9 im Bildbereich 2 mit schlechterer Qualität vorhanden, die wie eine Linse wirken und Licht von vorausfahrenden Fahrzeugen fokussieren und gegebenenfalls eine Belichtungssteuerung für die Kamera blenden. Der Bildbereich 2 mit schlechterer Qualität ist nahezu nicht nutzbar für die Analyse durch ein Fahrerassistenzsystem 300 in Figur 5, zumindest aber geht es mit sehr geringer Wichtung in eine Bildanalyse ein.

Um den Durchgang eines Scheibenwischerschattens 4 zu detektieren ist in Figur 2 dargestellt, wie Teilbereiche des Bildes 1 in Kreissegmente 11, 12, 13, 14, 15, 16, 17, 18, 19, 20, 21 und 22 aufgeteilt werden, wobei die Größe so gewählt ist, dass die Breite in der Größenordnung des Wischerabbildes liegt. Die Kreissegmente 11, 12, 13, 14, 15, 16, 17, 18, 19, 20, 21 und 22 sind in vorteilhafter Weise so angeordnet, dass sie in Ausrichtung des das Kamerabild 1 überstreichenden Scheibenwischers 4 ausgerichtet sind. Hierdurch lassen sich die Kreissegmente gruppieren und sofern ein Scheibenwischerschatten 4 das Kamerabild 1 überstreicht, weisen Histogramm der Bildbereiche 11, 12, 13, 14, 15, 16, 17, 18, 20, 21 und 22 etwa das Histogramm 14' auf. Der Bildbereich, der von einem Scheibenwischerschatten 4 überdeckt ist, weist hingegen etwa das Histogramm 19' auf. Durch Korrelation eines jeden Histogramms mit einem idealen Histogramm für einen Bildbereich, der von einem Scheibenwischer überdeckt ist, erzeugt die Funktion zur Scheibenwischerdetektion ihr Signal, wobei eine hohe Korrelation zu einem positiven Detektionssignal führt, eine geringe Korrelation hingegen führt zu einem negativen Detektionssignal.

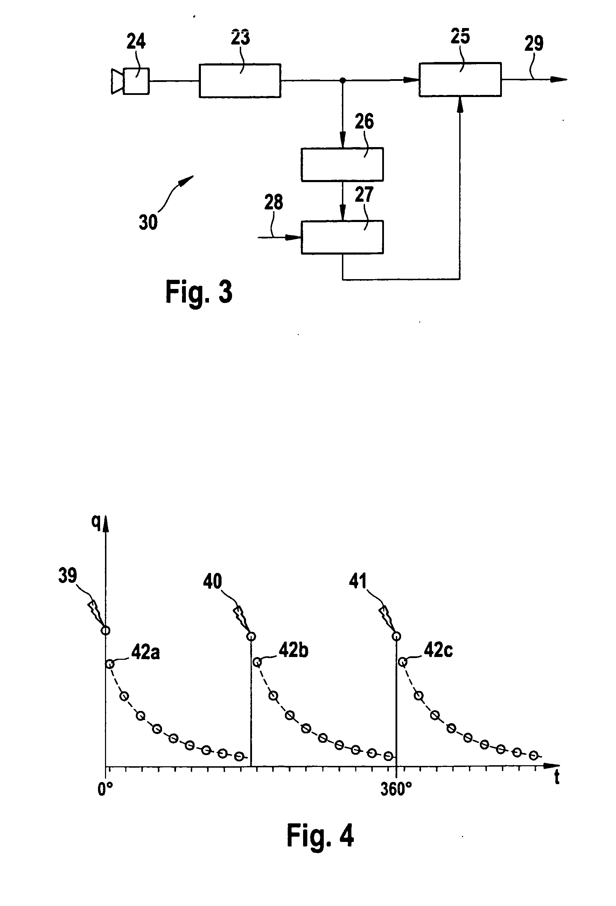

In Figur 3 ist ein Blockschaltbild 30 der Bildwichtungsfunktion dargestellt. Videobilder 23, die von einem Videosensor 24 stammen, werden direkt der Fahrerassistenzfunktion 25 und einer Scheibenwischerdetektionsfunktion 26 zugeleitet. Die Scheibenwischerdetektionsfunktion 26 ist direkt gekoppelt an die tatsächliche Überstreichung des Videobildes 23 durch den Scheibenwischer. Das aus der Scheibenwischerdetektionsfunktion 26 stammende Signal geht in einen softwareimplementierten PLL 27 ein, der ein Phasenzählersignal erzeugt und dieses mit dem Signal der Scheibenwischerdetektionsfunktion 26 synchronisiert. Optional erhält der PLL 27 ein zusätzliches Signal 28 einer Regennässedetektion eines Regensensors zur Variation der Scheibenwischerfrequenz eines Regensensors. Das synchronisierte Phasenzählersignal geht so dann in die Fahrerassistenzfunktion 25, wo diesem Signal ein Wichtungsfaktor zugeordnet wird. Dieser Wichtungsfaktor wird dazu verwendet, die Videobilder 23 zur Auswertung zu wichten und um damit das Ausgangssignal 29 der Fahrerassistenzfunktion zu verbessern.

In Figur 4 ist der zeitliche Verlauf eines Qualitätsmaßes q der Bildqualität dargestellt, wobei auf der Abszisse das hier nicht näher definierte Qualitätsmaß q und auf der Ordinate die Zeit t oder die Abfolge einzelner Bilder eines Videosensors aufgetragen ist. An den Sprungstellen 40 und 41 wird das Bild vom Scheibenwischer überwischt. In dem beispielhaften Diagramm in Figur 4 nimmt die Kamera 10 Bilder pro halber Wischerperiode auf. Das erste Bild nach jedem Wischerüberstrich weist das höchste Qualitätsmaß auf, das an den Punkten 42a, 42b und 42c eingetragen ist. Nach rechts im Diagramm folgen den eingetragenen Punkten 42a, 42b und 42c Bilder die einem mit zunehmender Zeit nach dem letzten Wischerüberstrich schlechtere Qualität aufweisen. Die Abnahme der Qualität folgt üblicherweise einer typischen Abklingkurve, wobei der exakte Verlauf von einer Vielzahl unterschiedlicher Parameter abhängig ist, wie die Oberflächenqualität der Windschutzscheibe, Alter der Wischer, Intensität des Regens, Größe der Regentropfen, Verschmutzungsgrad des auf die Windschutzscheibe auftreffenden Wassers, Reste von Detergenzien auf der Windschutzscheibe und weitere hier nicht aufgezählte Parameter. Ein Wischerzyklus von 0° bis 360° oder von 0 bis 2π umfasst dabei den Verlauf von einer ersten Sprungstelle, bspw. 39 bis zur übernächsten Sprungstelle, beispielsweise 41, weil der Scheibenwischer das Bild in einem Zyklus zweimal überstreicht. Da der Scheibenwischer nur innerhalb eines bestimmten Winkels hin- und her schwingt, entspricht der Zyklus von 0° bis 360° tatsächlichen Scheibenwischerstellungen im Verhältnis zur Horizontalen von ca. 0° bis ca. 90°, je nach dem, wie der Scheibenwischer mechanisch aufgebaut ist.

In Figur 5 ist schließlich die Ansicht einer Windschutzscheibe 50 mit eingezeichnetem Scheibenwischer 51 und in der oberen Mitte dargestellter Kamera 100 dargestellt. Kamera 100 nimmt Bilder durch die Windschutzscheibe 50 auf, um Einzelheiten in der Fahrzeugumgebung aufzunehmen, die durch ein Fahrerassistenzsystem 300 ausgewertet und auf einer Mensch-Maschine-Schnittstelle 400 (human machine interface, HMI), die optisch, akustisch oder auch haptisch ausgebildet sein kann, wird dem Fahrer zur Unterstützung das Ergebnis der Auswertung dargestellt. Um die Bildinformation für das Fahrerassistenzsystem 300 zu verbessern, wird zwischen das Fahrerassistenzsystem und der Kamera eine Rechnereinheit (200) zwischengeschaltet, die das Kamerabild von Kamera 100 analysiert und so zusammenstellt, dass nur qualitativ höherwertige Bilder im Fahrerassistenzsystem höher gewichtet werden.

## Patentansprüche

1. Verfahren zur Verarbeitung von aus einem Fahrzeug aufgenommenen Bildinformationen (1) mit einem Schritt zum Erfassen von zumindest Teilen eines Scheibenwischers (4) in den Bildinformationen (1) und einem Schritt des räumlichen Teilens der Bildinformationen (1) eines Einzelbildes durch einen detektierten Scheibenwischerschatten (4) des Scheibenwischers in qualitativ höherwertige (3) und qualitativ niederwertige (2) Bildinformationen, wobei der Scheibenwischerschatten einen ersten Bildbereich mit den qualitativ niederwertigen Bildinformationen, der in Bezug auf einen Scheibenwischerweg vor dem Scheibenwischer liegt, von einem zweiten Bildbereich mit den qualitativ höherwertigen Bildinformationen, der sich unmittelbar hinter dem bewegenden Scheibenwischer befindet, trennt.

2. Verfahren nach Anspruch 1, **gekennzeichnet durch** ein Synchronisieren eines Phasenzählers mit den Zeiträumen zwischen zwei aufeinander erfolgten Detektionen eines Scheibenwischers (4), wobei die Bildinformationen (3) mit Hilfe des Phasenzählers als qualitativ am höchsten eingestuft werden, die unmittelbar nach dem Überstreichen eines aufgenommenen Bildes **durch** den Scheibenwischer aufgenommen werden, die Bildinformationen (2) als qualitativ am niederwertigsten eingestuft werden, die unmittelbar vor dem Überstreichen eines aufgenommenen Bildes **durch** den Scheibenwischer-Detektion aufgenommen werden.

3. Verfahren nach einem der Ansprüche 1 oder 2, **gekennzeichnet durch** ein abwechselndes Bestimmen der Qualität der Bildinformationen in Abhängigkeit von der Detektion eines Scheibenwischers (4), wobei bei positiver Detektion des Scheibenwischers im Bild die räumliche Teilung und bei negativer Detektion eines Scheibenwischers im Bild die Qualitätseinstufung mit Hilfe des synchronisierten Phasenzählers durchgeführt wird.

4. Verfahren nach einem der Ansprüche 1 bis 3, **gekennzeichnet durch** das Erfassen eines Scheibenwischers (4) **durch** eine Bestimmung des Rauschmaßes einzelner Bildteile (2,3), wobei die Bildteile (2,3), die ein hohes Rauschmaß zeigen (2), qualitativ niederwertiger und die Bildteile, die ein geringes Rauschmaß zeigen (3), qualitativ höherwertiger eingestuft werden.

5. Verfahren nach einem der Ansprüche 1 bis 4, **gekennzeichnet durch** das Erfassen eines Scheibenwischers (4) **durch** Aufteilung der Bildinformationen (1) in einzelne Bildteile (11, 12, 13, 14, 15, 16, 17) und anschließendes Bestimmen eines Helligkeitshistogramms (18, 19) für jeden individuellen Bildteil (11, 12, 13, 14, 15, 16, 17), wobei die Bildteile, die eine im Vergleich zu den anderen Bildteilen niedrige Belichtung aufweisen, als vom Scheibenwischer (4) überdeckt gewertet werden.

6. Verfahren nach einem der Ansprüche 1 bis 5, **gekennzeichnet durch** eine zusätzliche eine Plausibilitätsüberprüfung der Qualitätseinstufung für unterschiedliche Bildbereiche (2,3), wobei die Lage der Bildbereiche (2,3), die Zeit der letzten positiven Scheibenwischerdetektion und/oder die Zeit aus den Synchronisationsparametem zur Plausibilisierung verwendet werden.

7. Verfahren nach einem der Anspruch 1 bis 6, **gekennzeichnet durch** ein Verschieben der als qualitativ höherwertig eingestuften Bildinformationen, die zu einem späteren Zeitpunkt als unmittelbar nach Überstreichen **durch** den Scheibenwischer (4) aufgenommen werden, wenn Daten über ein eingeschaltetes Scheibengebläse vorliegen.

8. Verfahren nach einem der Ansprüche 1 bis 7, **gekennzeichnet durch** eine softwareimplementierte PLL-Synchronisation, in welcher die Detektion des Scheibenwischers im Bild mit dem Ablauf eines Bildzählers verglichen wird, wobei dann ein Phasenunterschied festgestellt wird, wenn der Ablauf des Bildzählers nicht mit der Detektion des Scheibenwischers zeitlich zusammenfällt und in diesem Fall der Ablauf des Bildzählers **dadurch** variiert wird, dass die Zahl der zu zählenden Bilder variiert wird, bis die Detektion des Scheibenwischers im Bild mit dem Ablauf des Bildzählers zeitlich zusammenfällt.

9. Verfahren nach einem der Anspruch 1 bis 8, **gekennzeichnet durch** eine Synchronisation der Qualitätseinstufung mit Winkelgeberdaten des Scheibenwischers (4).

10. Verfahren nach einem der Ansprüche 1 bis 9, **gekennzeichnet durch** eine Synchronisation der Belichtungsparameter mit dem Erfassen des Scheibenwischers (4).

11. Vorrichtung zur Verarbeitung von aus einem Fahrzeug aufgenommenen Bildinformationen mit mindestens einer Kamera (24) und mindestens einer Rechnereinheit (200), wobei die Rechnereinheit (200) die Bildinformationen aus der Kamera in einzelne Bildteile unterteilt und für jede individuelle Bildeinheit eine statistische Berechnung durchführt, wobei die Rechnereinheit (200) die Daten der statistischen Berechnung dazu verwendet, zu entscheiden, ob zumindest ein Teil eines Scheibenwischers in der jeweiligen Bildeinheit vorhanden ist oder nicht und ob die Qualität der Bildinformation hoch oder niedrig ist, wobei zum Entscheiden, ob die Qualität der Bildinformation hoch oder niedrig ist, die Bildinformationen (1) eines Einzelbildes durch einen detektierten Scheibenwischerschatten (4) des Scheibenwischers in einen ersten Bildbereich mit qualitativ niederwertigen Bildinformationen, der in Bezug auf einen Scheibenwischerweg vor dem Scheibenwischer liegt, und einen zweiten Bildbereich mit qualitativ höherwertigen Bildinformationen, der sich unmittelbar hinter dem bewegenden Scheibenwischer befindet, räumlich getrennt werden.

12. Vorrichtung nach Anspruch 11, wobei die Rechnereinheit zusätzlich Zeitdaten zur statistischen Berechnung verwendet, und diese Zeitdaten in Form einer Synchronisation, bevorzugt einer PLL-Synchronisation, dazu verwendet, das Erfassen des Scheibenwischers in individuellen Bildteilen durch Antizipation zu verbessern.

## Claims

1. Method for processing recorded image information (1) recorded out of a vehicle, having a step for capturing at least parts of a windscreen wiper (4) in the image information (1) and a step of spatially dividing the image information (1) of an individual image into qualitatively relatively high-value image information (3) and qualitatively low-value image information (2) by means of a detected windscreen wiper shadow (4) of the windscreen wiper, wherein the windscreen wiper shadow divides a first image area with the qualitatively low-value image information, which is located in front of the windscreen wiper with respect to a windscreen wiper travel, from a second image area with the qualitatively relatively high-value image information, which is located directly behind the moving windscreen wiper.

2. Method according to Claim 1, **characterized by** synchronization of a phase counter with the time periods between two detections of a windscreen wiper (4) which have occurred successively, wherein the image information (3) which is recorded directly after the windscreen wiper has passed over a recorded image is categorized as qualitatively the highest using the phase counter, and the image information (2) which is recorded by the windscreen wiper detection directly before a recorded image is passed over is categorized as qualitatively the lowest.

3. Method according to Claim 1 or 2, **characterized by** alternating determination of the quality of the image information as a function of the detection of a windscreen wiper (4), wherein in the case of a positive detection of the windscreen wiper in the image the spatial division is carried out, and in the case of a negative detection of a windscreen wiper in the image the quality categorization is carried out using the synchronized phase counter.

4. Method according to one of Claims 1 to 3, **characterized by** the detection of a windscreen wiper (4) by determination of the noise measure of individual image parts (2, 3), wherein the image parts (2, 3) which indicate a high noise measure (2) are categorized as qualitatively lower, and the image parts which indicate a low noise measure (3) are categorized as qualitatively higher.

5. Method according to one of Claims 1 to 4, **characterized by** the detection of a windscreen wiper (4) by dividing the image information (1) into individual image parts (11, 12, 13, 14, 15, 16, 17) and subsequent determination of a brightness histogram (18, 19) for each individual image part (11, 12, 13, 14, 15, 16, 17), wherein the image parts which have low lighting compared to the other image parts are evaluated as being covered by the windscreen wiper (4).

6. Method according to one of Claims 1 to 5, **characterized by** an additional plausibility check of the quality categorization of the different image areas (2, 3), wherein the position of the image areas (2, 3), the time of the last positive windscreen wiper detection and/or the time from the synchronization parameters are used for plausibility checking.

7. Method according to one of Claims 1 to 6, **characterized by** displacement of the image information which has been categorized as qualitatively higher and which is recorded at a later time than directly after the windscreen wiper (4) passes over, if data relating to a switched-on windscreen blower is available.

8. Method according to one of Claims 1 to 7, **characterized by** a software-implemented PLL synchronization in which the detection of the windscreen wiper in the image is compared with the sequence of an image counter, wherein a phase difference is detected if the sequence of the image counter does not coincide chronologically with the detection of the windscreen wiper, and in this case the sequence of the image counter is varied by virtue of the fact that the number of the images to be counted is varied until the detection of the windscreen wiper in the image coincides chronologically with the sequence of the image counter.

9. Method according to one of Claims 1 to 8, **characterized by** synchronization of the quality categorization with angle generator data of the windscreen wiper (4).

10. Method according to one of Claims 1 to 9, **characterized by** synchronization of the lighting parameter with the detection of the windscreen wiper (4).

11. Device for processing image information recorded out of a vehicle with at least one camera (24) and at least one computer unit (200), wherein the computer unit (200) divides the image information from the camera into individual image parts, and a statistical calculation is carried out for each individual image unit, wherein the computer unit (200) uses the data of the statistical calculation to decide whether or not at least part of a windscreen wiper is present in the respective image unit and whether the quality of the image information is high or low, wherein in order to decide whether the quality of the image information is high or low, the image information (1) of an individual image is spatially divided, by a detected windscreen wiper shadow (4) of the windscreen wiper, into a first image area with qualitatively low-value image information, which image area lies in front of the windscreen wiper with respect to a windscreen wiper travel, and a second image area with qualitatively relatively high-value image information, which image area is located directly behind the moving windscreen wiper.

12. Device according to Claim 11, wherein the computer unit additionally uses time data for statistical calculation, and uses this time data in the form of a synchronization, preferably a PLL synchronization, to improve the detection of the windscreen wiper in individual image parts by means of anticipation.

## Revendications

1. Procédé de traitement d'informations d'image (1) enregistrées depuis un véhicule, comprenant une étape de détection d'au moins des parties d'un essuie-glace (4) dans les informations d'image (1) et une étape de séparation dans l'espace des informations d'image (1) d'une image individuelle par une ombre d'essuie-glace (4) détectée de l'essuie-glace en informations d'image à haute valeur qualitative (3) et à basse valeur qualitative (2), l'ombre d'essuie-glace séparant une première zone d'image contenant les informations d'image à basse valeur qualitative, laquelle se trouve devant l'essuie-glace par rapport à un trajet de l'essuie-glace, d'une deuxième zone d'essuie-glace contenant les informations d'image à haute valeur qualitative, laquelle se trouve directement derrière l'essuie-glace en mouvement.

2. Procédé selon la revendication 1, **caractérisé par** une synchronisation d'un compteur de phase avec les périodes entre deux détections successives d'un essuie-glace (4), les informations d'image (3) classifiée qualitativement les plus hautes à l'aide du compteur de phase étant celles qui sont enregistrées immédiatement après le balayage d'une image enregistrée par l'essuie-glace, les informations d'image (2) classifiée qualitativement les plus basses étant celles qui ont été enregistrées immédiatement avant le balayage d'une image enregistrée par la détection d'essuie-glace.

3. Procédé selon l'une des revendications 1 ou 2, **caractérisé par** une détermination alternée de la qualité des informations d'image en fonction de la détection d'un essuie-glace (4), la séparation dans l'espace étant effectuée en cas de détection positive de l'essuie-glace dans l'image et la classification en qualités à l'aide du compteur de phase synchronisé étant effectuée en cas de détection négative d'un essuie-glace dans l'image.

4. Procédé selon l'une des revendications 1 à 3, **caractérisé par** la détection d'un essuie-glace (4) par une détermination de l'indice de bruit des parties d'image individuelles (2, 3), les parties d'image (2, 3) qui présentent un indice de bruit élevé (2) étant classifiées qualitativement à une valeur plus basse et les parties d'image qui présentent un indice de bruit faible (3) étant classifiées qualitativement à une valeur plus haute.

5. Procédé selon l'une des revendications 1 à 4, **caractérisé par** la détection d'un essuie-glace (4) en divisant les informations d'image (1) en parties d'image individuelles (11, 12, 13, 14, 15, 16, 17) et en déterminant ensuite un histogramme de luminosité (18, 19) pour chaque partie d'image individuelle (11, 12, 13, 14, 15, 16, 17), les parties d'image qui présentent un éclairage plus faible en comparaison des autres étant interprétées comme étant recouvertes par l'essuie-glace (4).

6. Procédé selon l'une des revendications 1 à 5, **caractérisé par** un contrôle de plausibilité supplémentaire de la classification de qualité des différentes zone d'image (2, 3), la position des zones d'image (2, 3), le moment de la dernière détection positive de l'essuie-glace et/ou le moment issu des paramètres de synchronisation étant utilisés pour déterminer la plausibilité.

7. Procédé selon l'une des revendications 1 à 6, **caractérisé par** un décalage des informations d'image classifiées comme étant à haute valeur qualitative, lesquelles sont enregistrées à un moment ultérieur à immédiatement après le balayage par l'essuie-glace (4), lorsqu'il existe des données sur une soufflerie de pare-brise mise en marche.

8. Procédé selon l'une des revendications 1 à 7, **caractérisé par** une synchronisation PLL mise en oeuvre par logiciel, dans laquelle la détection de l'essuie-glace dans l'image est comparée avec l'écoulement d'un compteur d'images, une différence de phase étant constatée lorsque l'écoulement du compteur d'images ne coïncide pas dans le temps avec la détection de l'essuie-glace et dans ce cas l'écoulement du compteur d'images varie en ce que le nombre d'images à compter est modifié jusqu'à ce que la détection de l'essuie-glace dans l'image coïncide dans le temps avec l'écoulement du compteur d'images.

9. Procédé selon l'une des revendications 1 à 8, **caractérisé par** une synchronisation de la classification de qualité avec des données d'un codeur angulaire de l'essuie-glace (4).

10. Procédé selon l'une des revendications 1 à 9, **caractérisé par** une synchronisation des paramètres d'éclairage avec la détection de l'essuie-glace (4).

11. Dispositif de traitement d'informations d'image enregistrées depuis un véhicule, comprenant au moins une caméra (24) et au moins une unité de calcul (200), l'unité de calcul (200) divisant les informations d'image issues de la caméra en parties d'image individuelles et effectuent un calcul statistique pour chaque unité d'image individuelle, l'unité de calcul (200) utilisant les données du calcul statistique pour décider si au moins une partie d'un essuie-glace est présente ou non dans l'unité d'image correspondante et si la qualité de l'information d'image est élevée ou faible, la décision de la qualité élevée ou faible de l'information d'image étant prise en séparant dans l'espace les informations d'image (1) d'une image individuelle par une ombre d'essuie-glace (4) détectée de l'essuie-glace en une première zone d'image contenant des informations d'image à basse valeur qualitative, laquelle se trouve devant l'essuie-glace par rapport à un trajet de l'essuie-glace, et une deuxième zone d'essuie-glace contenant des informations d'image à haute valeur qualitative, laquelle se trouve directement derrière l'essuie-glace en mouvement.

12. Dispositif selon la revendication 11, l'unité de calcul utilisant des données de temps supplémentaires pour le calcul statistique et utilisant ces données de temps sous la forme d'une synchronisation, de préférence d'une synchronisation PLL, pour améliorer la détection de l'essuie-glace dans les parties d'image individuelles par anticipation.
